Europäisches Patentamt

European Patent Office

Office européen des brevets

(11) Publication number: 0 395 385
A2

## (12) EUROPEAN PATENT APPLICATION

(21) Application number: 90304462.6

(22) Date of filing: 25.04.90

(51) Int. Cl.5: G03G 15/20

(30) Priority: 28.04.89 US 345051

(43) Date of publication of application:
31.10.90 Bulletin 90/44

(84) Designated Contracting States:
DE FR GB

(71) Applicant: XEROX CORPORATION
Xerox Square - 020
Rochester New York 14644(US)

(72) Inventor: LaBombard, Richard G.
32 Sisson Drive
Rochester, New York 14623(US)
Inventor: Halliley, Karen E.
5559 Eddy Ridge Road
Marion, New York 14505(US)

(74) Representative: Weatherald, Keith Baynes et
al
Rank Xerox Limited Patent Department 364
Euston Road
London NW1 3BL(GB)

(54) Fuser rolls.

(57) A three-part fuser roll structure for use in a xerographic copying machine comprises two aluminum end caps (156) and a central core aluminum tube joined together by an inertia welding process. Each end cap initially an annular cavity for containing fused metal created during the inertia welding process.

**FIG. 7**

## FUSER ROLLS

This invention relates to fuser rolls for reprographic machines, and more particularly, to such rolls in which is trapped debris resulting from the inertia welding of end caps made of a particular material to a fuser support member of the same material.

In the art of xerography, a latent electrostatic image is formed on a charge-retentive surface such as of a photoconductor which generally comprises a photoconductive insulation material adhered to a conductive backing. This photoconductor is first provided with a uniform charge, after which it is exposed to an image of an original document to be reproduced. The latent electrostatic images thus formed are rendered visible by applying any one of numerous pigmented resins specifically designed for this purpose. In the case of a reusable photoconductive surface, the pigmented resin, more commonly referred to as 'toner', is transferred to plain paper or other substrate.

It should be understood that for the purpose of the present invention, which relates to apparatus for fusing toner particles onto copy substrates, in addition to the electrostatically-charged photosensitive member being exposed to a light image of an original document, to effect selective discharge, the latent electrostatic image may be generated from information electronically stored or generated, and the digital information may be converted to alphanumeric images by image generation electronics and optics. However, such image generation electronic and optic devices form no part of the present invention.

In an automatic xerographic process of the type disclosed in US-A-3 062 108 the utilization of a heated fixing mechanism for achieving the permanent bonding of the developed latent electrostatic image onto the copy medium has proven highly satisfactory. One such fixing mechanism is commonly referred to as a fuser roll assembly. The fuser roll assembly additionally functions to feed the copy medium, such as paper, through the transfer station of a typical xerographic machine. In providing the foregoing function, the fuser roll assembly cooperates with a backup roll, disclosed in US-A-3,291,466.

In a typical construction of a fuser roll assembly, a hollow, generally-cylindrical, roll is mounted for rotation about its longitudinal axis, and is provided, along this axis, with an electric heating element. Such a roll is usually constructed of a copper or aluminum core which is provided with a coating of a suitable theromoplastic material, for example, polytetrafluoroethylene (herein after referred to as PTFE). PTFE is a fluorocarbon resin currently sold under the trademark "Teflon" by the E.I duPont de Nemours and Company, Inc.

Other suitable materials for coating the core are silicone rubber and that plastics material sold under the trademark 'Viton'.

Typically, the core of a fuser roll assembly is fabricated by soldering, welding, or otherwise suitably attaching end caps to each end of a cylindrical tube. Additionally, a drive coupling has to be added to at least one end cap to provide for imparting rotational motion to the roll. Some examples of known fuser roll structures are found in US-A-4,522,866 and 4,207,059.

Other patents relating to fuser rolls include US-A-4,229,950 which discloses a coupling for securely mounting an internally heated roller in place. US-A-4,395,109 is directed to a fixing device for an electronic duplicating machine, including a heat-generating roller with a journal portion on each end for supporting the roller. A photosensitive drum assembly for an electrostatic copying apparatus is disclosed in US-A- 4,400,077 which cylindrical drum is held between a pair of flanges at opposite ends of the drum.

Fuser roll assembly construction involving similar materials has become a major expense in the manufacturing of copiers because of the machining required in order to connect end caps to fuser cores and to deal with the "ram horns" (flash) created by inertia (friction) welding the end caps to the fuser core. Accordingly, the present invention relates to a design and method for connecting fuser cores and end caps together that is easily implemented and low in cost. The invention provides an end cap design for a fuser core for trapping the debris left from the inertia welding process that would ordinarily be left inside the fuser core.

The present invention will now be described by way of example with reference to the accompanying drawings, in which:

Figure 1 is a side elevation of a known fuser core structure;

Figures 2A - 2D are schematic side views of a device depicting steps in inertia welding;

Figure 3 is a side view depicting a xerographic reproduction machine adapted to incorporate the fuser roll of the present invention;

Figure 4 is a side view of a fuser core that includes end caps of one material and a support structure of a different material.

Figure 5 is a an end view of the fuser core of Figure 4;

Figure 6 is an elevational view of an end cap as shown in Figure 4, and

Figure 7 is an elevational view of an end cap of a fuser roll of the present invention.

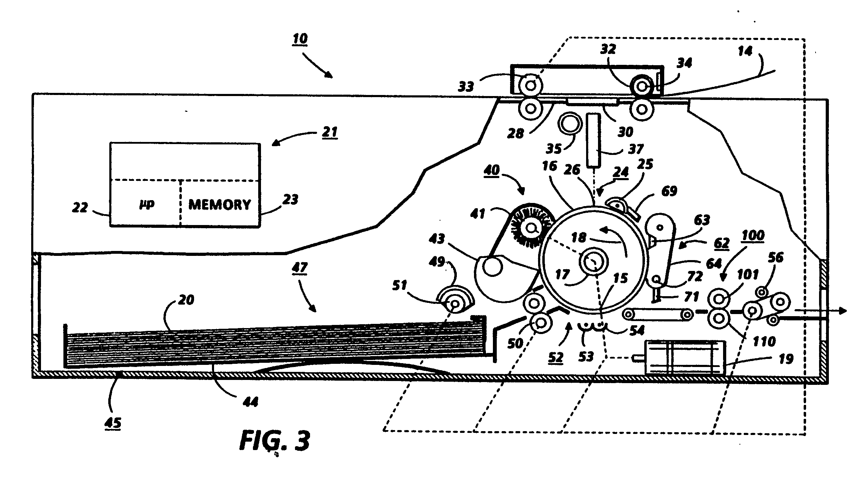

Referring to Figure 3 of the drawings, there is shown by way of example an automatic xerographic reproduction machine 10 incorporating a fuser roll structure of the present invention.

The reproduction machine 10 illustrates the various components utilized in machines of this type for producing copies of a document original 14.

Reproduction machine 10 has an image-recording photoreceptor 15 in the form of a drum, the outer surface of which is a suitable photoconductive material 16. Photoreceptor 15 is suitably journaled for rotation within the machine frame (not shown) as by means of shaft 17. A main drive motor 19 is drivingly coupled to photoreceptor 15, motor 19 rotating photoreceptor 15 in the direction indicated by arrow 18 to bring the photoconductive surface 16 of photoreceptor 15 past a series of xerographic processing stations. A suitable controller 21, with microprocessor 22 and memory 23, is provided for operating in predetermined timed relationship the various components of machine 10 to reproduce the document original 14 upon a sheet of final support material, such as copy sheet 20. As will be understood by those familiar with the art, memory 23 may comprise suitable read-only memory (ROM), random access memory (RAM), and/or non-volatile memory (NVM), memory 23 serving to store the various operating parameters for reproduction machine 10, and the copy run information programmed by the user.

Initially, the photoconductive surface 16 of photoreceptor 15 is uniformly charged by a suitable charging device, such as scorotron 25 at charging station 24. The charged surface 16 is selectively exposed at exposure station 26 to create a latent electrostatic image of the document original 14 on photoreceptor 15. For this purpose, a suitable supporting surface or platen 28 for document original 14 is provided having a scan aperture or slit 30 therethrough. A suitable document transport, depicted herein as inlet and outlet constant-velocity roll pairs 32, 33, is provided for transporting the document original past scan slit 30. Roll pairs 32, 33 are drivingly coupled to main driver motor 19, roll pair 32 being coupled through an electromagnetically operated clutch 34. A suitable document sensor (not shown) is provided at the inlet to platen 28 for sensing the insertion of a document original 14 to be copied and initiating operation of the reproduction machine 10.

A lamp 35, which is disposed below platen 28, serves to illuminate scan slit 30 and the line-like portion of the document original 14 thereover. A suitable fiber optic type lens array 37 which may, for example, comprise an array of gradient index fiber elements, is provided to transmit optically the image ray selected from the line-like portion of the document original being scanned to the photoconductive surface 16 of photoreceptor 15 at exposure station 26.

Following exposure, the latent image on the photoconductive surface 16 of photoreceptor 15 is developed at the development station 40. There, a suitable developer, such as magnetic brush roll 41, which is drivingly coupled to main drive motor 19, brings a suitable developer mix in developer housing 43 into developing relation with the latent image to develop the image and render the same visible.

Copy sheets 20 are supported in stack-like fashion on base 44 of copy sheet supply tray 45. Suitable biasing means are provided to raise base 44 of tray 45 and bring the topmost copy sheet 20 in the stack of sheets 47 into operative relationship with segmented feed rolls 49. Feed rolls 49 are driven by main motor 19 through an electromagnetically operated clutch 51 to feed the topmost copy sheet forward into the nip of the registration roll pair 50 which register the copy sheets with the image on the photoconductive surface 16 of photoreceptor 15. Registration roll pair 50 advance the copy sheet to transfer station 52. There, suitable transfer/detack means, such as transfer/detack corotrons 53, 54, bring the copy sheet into transfer relation with the developed image on photoconductive surface 16 and separate the copy sheet therefrom for fixing and discharge as a finished copy.

Following transfer station 52, the image-bearing copy sheet is transported to fuser 100 where the toner images are rendered permanent.

The fused copy is transported by roll pair 56 to a suitable receptacle such as an output tray (not shown). Registration roll pair 50 and transport roll pair 56 are driven by main drive motor 19 through suitable driving means such as belts and pulleys.

Following transfer, residual developer remaining on the photoconductive surface 16 of photoreceptor 15 is removed at cleaning station 62 by means of cleaning blade 63. Developer removed by blade 63 is deposited into a suitable collector 64 for removal.

While a drum-type photoreceptor is shown and described herein, it will be understood that other photoreceptor types may be employed, such as belt, web, etc.

To permit effective and controlled charging of the photoconductive surface 16 by scorotron 25 to a predetermined level necessitates that any residual charges on the photoconductive surface 16 or trapped in the photoreceptor be removed prior to charging. An erase device 69 is provided for this purpose.

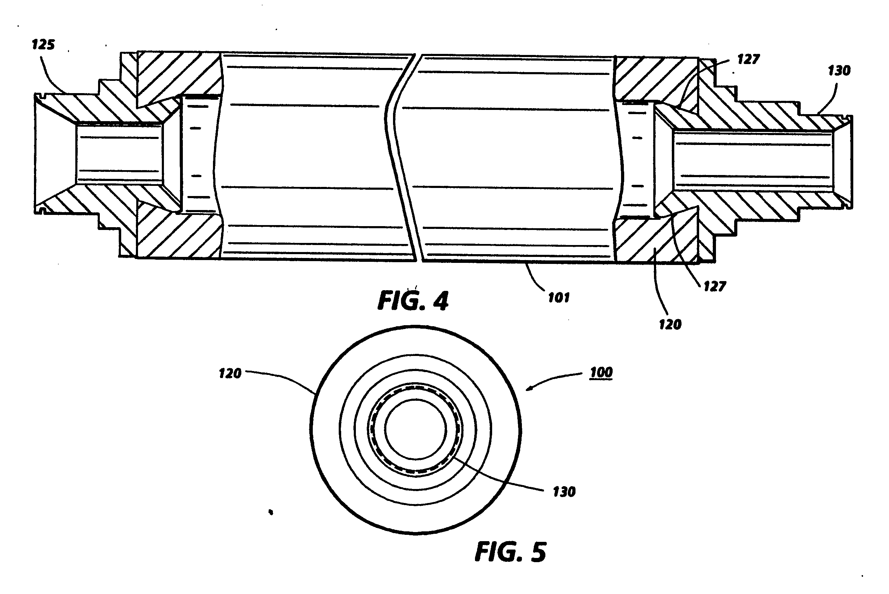

The fuser 100 comprises a heat and pressure roll fuser including a heated fuser roll 101 and a pressure roll 110. As illustrated in Figures 4 - 6, the fuser roll core 101 comprises an extruded aluminium tube 120, drive end cap 125 and end cap 130. The end caps 125, 130 are welded to tube 120 by a process described in further detail below.

Tube 120, in a preferred embodiment, is made of aluminum alloy 6063-T5. It is made by heating an aluminum extrusion ingot, placing the heated ingot in an extrusion press and forcing it through an opening of the desired shape. The aluminum takes on the shape of the steel die, forming a single hollow extrusion. The resulting tube has excellent grain structure, uniform allying element distribution and can be easily welded and machined. End caps 125 and 130 area preferably made from a different alloy.

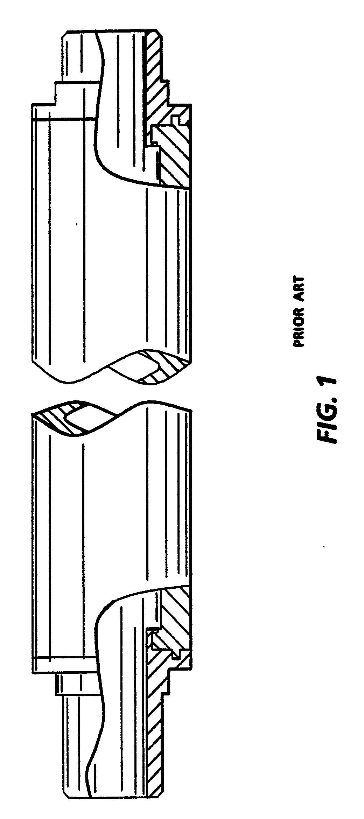

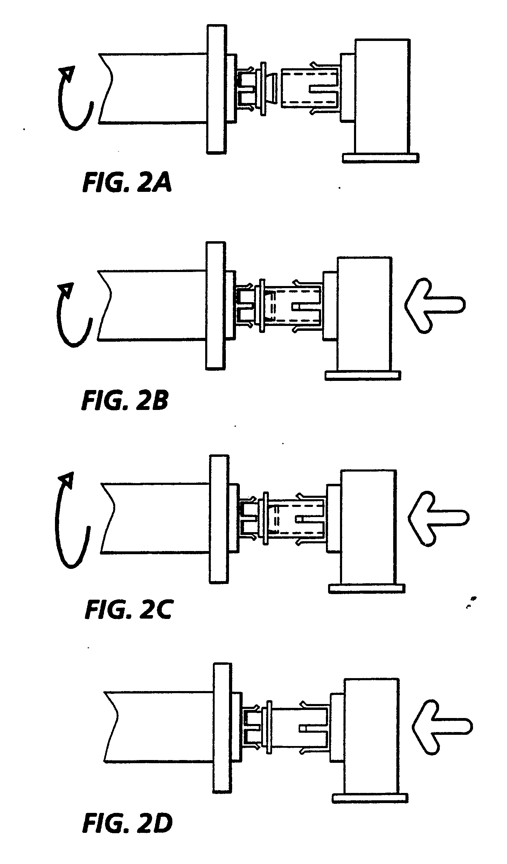

As seen in Figure 1, heretofore, finely-machined end caps were mated to finely-machined fuser roll cylinders. This method of preparing end caps for mating with fuser rolls is quite costly. In order to reduce the cost of attaching end caps to fuser roll cylinders, inertia welding of the three parts together is. In inertia welding generally, as shown in Figure 2A, one workpiece is fixed in a stationary holding device. The other is clamped in a spindle chuck, usually with an attached flywheel, and is accelerated rapidly. At a predetermined speed, driving power is removed and the fixed workpiece is thrust against the rotating workpiece. Friction between the two workpieces, as shown in Figure 2B, decelerates the flywheel, converting stored energy to frictional heat which is enough to soften, but not melt, faces of the workpieces. With reference to Figure 2C, just before relative rotation ceases, the two workpieces bond together. The remaining flywheel energy hot works the metal interface, expelling any impurities or voids and refining grain structure. In Figure 2D, the weld is complete when the flywheel stops.

When inertial welding strongly dissimilar materials, the chances for a consistent metallurgical weld, and the cost of the weld, are directly proportional to the amount of joint preparation taken. Figures 4 - 6 disclose a joint design that allows for a locking effect to replace the metallurgical weld as the provider of joint strength.

Both steel end caps 125 and 130 are inertia welded to cylindrical aluminum fuser structure 101 in the same manner. For example, end cap 125 is placed into a collet (not shown) and cylindrical fuser support member 101 is held stationary. The collet is spun using a flywheel that is turned by a motor. Gradually the fuser core 101 is moved into contact with the end cap, and the friction between them causes the aluminum tube to melt into relieved portion 127 of the end cap. Driving of the end cap is stopped just before the support structure is brought into contact with the end cap, but rotation of the end cap continues. Once the driving force to the end cap is removed, melting of the aluminum continues for as short period and then the aluminum solidifies and thereby stops the further movement of the end cap. A conventional heater in the form of a lamp (not shown) is inside the core tube when the fuser roll is in place inside a machine, and it heats the covering on the core tube. The heat from the lamp serves to expand the aluminum further and locks it into the recessed space of the end cap. This method of welding dissimilar metals is so efficient that reclaiming the fuser is made extremely practical once the fuser structure covering is used up.

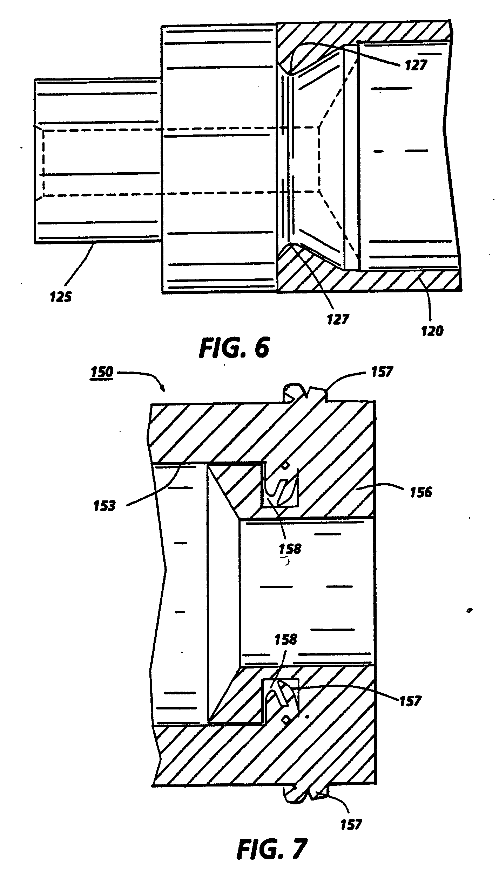

When inertia welding similar materials, the chances for consistent metallurgical bonds, cost of the welds, and the debris left inside the core are directly proportional to the type of joint preparation used. With known welding techniques used to join end caps and cores of similar metals, the debris left inside the core may break off and hit the heater inside the core and cause hot spots or short the heater out. This necessitates the costly process of going into the machine to remove the fuser and subsequently remove the heater from the fuser roll. This debris could be machined out of the core, but that would be quite costly. A cost-effective method of joining two similar materials is disclosed in Figure 7, and allows for trapping of debris left from the welding process which would normally be left inside the core 150. The end cap 156 of Figure 7 has a trap area 158 in the form of a rectangular groove that catches the "rams horns" 157 or excess debris that accumulates once fuser core 153 and end cap 156 are inertia welded together as heretofore described. The "rams horns" that are created externally of the core is machined off to present a smooth and uniform appearance.

A cost-effective method of attaching end caps to a fuser roll core has been disclosed that includes inertia welding the end caps to the core. Either the core or the end caps can be rotated during the inertia welding. For example, when welding similar metals, a spinning aluminum fuser roll cylinder is moved over the portion of a stationary aluminum end cap that is orthogonal to a vertical wall surface of the middle portion of the end cap and is pushed against the middle portion of the end cap. The aluminum melts by friction and forms "rams horns" that substantially fill a rectangular groove that is part of the orthogonal portion of the end cap. The aluminum also flows to form external "rams horns", but this 'bead' is removed subsequently by machining. This method has the advantage of improved control of debris left inside the hollow roll as compared with allowing pieces of the debris to flail around uncontrollably within the roll.

**Claims**

1. A fuser roll structure made of similar materials comprising a first drive end cap and a second end cap (156) each secured to the ends of a hollow cylindrical core (153) by inertia (friction) welding, each end cap having in it a recess (158) to contain flash created inside the core by the welding process.

2. The fuser roll structure of claim 1, wherein the end caps and core are made of an aluminum alloy.

3. The fuser roll structure of claim 1, wherein the recess in each end cap is initially rectangular in cross-section.

4. A method of fabricating a fuser roll structure, including the steps of:

     (a) providing a hollow cylindrical aluminum tube (153);

     (b) providing end caps (156) of a similar material to mate with the ends of the tube (153), each end cap having a cavity (158) formed in its outer surface;

     (c) securing the tube;

     (d) spinning at least one end cap;

     (e) bringing the tube into contact with the spinning end cap, thereby creating friction between the tube and the end cap that causes a portion of the tube to melt into the said cavity, thereby creating an interlock between the tube and the end cap when the molten aluminum solidifies, and

     (f) repeating step (e) for the other end cap.

5. The method of claim 5, including the step of machining away any excess flash that extends beyond the outside surface of the tube.

PRIOR ART

FIG. 1

FIG. 2A

FIG. 2B

FIG. 2C

FIG. 2D

FIG. 3

EP 0 395 385 A2

FIG. 4

FIG. 5

**FIG. 6**

**FIG. 7**